(19) **Europäisches Patentamt**
**European Patent Office**
**Office européen des brevets**

(11) **EP 4 019 148 A1**

(12) **EUROPEAN PATENT APPLICATION**

(43) Date of publication:
**29.06.2022 Bulletin 2022/26**

(21) Application number: **22156166.5**

(22) Date of filing: **17.10.2019**

(51) International Patent Classification (IPC):
**B05B 15/62** (2018.01)   **A01N 43/40** (2006.01)
**B05B 7/24** (2006.01)   **A01N 25/00** (2006.01)

(52) Cooperative Patent Classification (CPC):
**B05B 7/2443; A01N 25/00; A01N 43/40;**
**B05B 7/2445; B05B 7/2481; B05B 15/62**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.10.2018 GB 201817080**
**19.10.2018 GB 201817066**
**19.10.2018 GB 201817069**

(62) Document number(s) of the earlier application(s) in
accordance with Art. 76 EPC:
**19786435.8 / 3 866 987**

(71) Applicant: **Syngenta Crop Protection AG**
**4058 Basel (CH)**

(72) Inventors:
• **JOHNSTONE, Sam**
**Cambridge, CB22 7GG (GB)**
• **WILLIAMS, Erik**
**Cambridge, CB22 7GG (GB)**
• **BECKETT, Trevor**
**Cambridge, CB22 7GG (GB)**
• **KILBY, Charles**
**Cambridge, CB22 7GG (GB)**

(74) Representative: **HGF**
**HGF BV**
**Benoordenhoutseweg 46**
**2596 BC The Hague (NL)**

Remarks:
This application was filed on 10.02.2022 as a
divisional application to the application mentioned
under INID code 62.

(54) **A CARTRIDGE FOR A SPRAYING APPARATUS**

(57)    A cartridge for attachment to a spraying apparatus for spraying a solution is disclosed. The cartridge comprises a cartridge housing; a reservoir for housing a liquid concentrate, wherein the reservoir is located within the cartridge housing; a fluid port for fluidly coupling the reservoir to a spraying apparatus; an orifice plate located between the reservoir and the fluid port, such that a flow of liquid concentrate from the reservoir to the spraying apparatus through the fluid port is directed through the orifice plate; and a fluid inlet for fluidly coupling the cartridge housing to the spraying apparatus, wherein the cartridge is configured such that fluid introduced into the cartridge housing through the fluid inlet acts to pressurise the reservoir.

Fig. 3

**Description**

This invention relates generally to a cartridge for a spraying apparatus. In particular but not exclusively, the present invention relates to a cartridge for a spraying apparatus for treating plant matter.

Knapsack sprayers may be used in agricultural settings to direct herbicide onto weeds in crops. Generally, herbicides have a high human toxicity, so minimum contact with the user is required.

Commercial knapsack sprayers have a single spray tank into which an herbicide concentrate is poured from a screw-top bottle and the tank is then topped up with water. In effect the spray solution is mixed during storage. The tank is then pressurised at intervals by a hand pump and the spray solution is sprayed through a hose and out of a lance nozzle. The lance nozzle is controlled and directed by the user.

Tank leakages and leakages in various joints and pipes can result in a user coming into contact with the spray solution. The solution is also mixed prior to spraying and as such any point of leakage can contain herbicide which would be harmful to the user.

In addition, screw top bottles present a potential toxic hazard, and empty (and nearly empty) bottles of concentrate represent a possible toxicological or environmental hazard when disposed of in that they contain concentrated residue of the toxic herbicide.

It would therefore be advantageous to provide a convenient sprayer system, which reduces the risk of a user being exposed to concentrate during and after use of the sprayer.

US7784715 B2 discloses a cartridge for an admixing arrangement of a manually operable arrangement for spraying a solvent.

EP2065084 B1 discloses a transparent outer container and a pressure sensitive inner container for receiving fluid concentrate.

Craig et al ("Fluid injection metering system for closed pesticide delivery in manually operated sprayers", Crop Protection 1993 Volume 12 Number 7 p549-553 ISBN 0261-2194/93/07/0549-05) discloses a venturi-based injection method for a closed pesticide delivery system for manually operated sprayers.

According to a first aspect of the invention there is provided a cartridge for attachment to a spraying apparatus for spraying a solution, the cartridge comprising:

  a cartridge housing;
  a reservoir for housing a liquid concentrate, wherein the reservoir is located within the cartridge housing;
  a fluid port for fluidly coupling the reservoir to a spraying apparatus;
  an orifice plate located between the reservoir and the fluid port, such that a flow of liquid concentrate from the reservoir to the spraying apparatus through the fluid port is directed through the orifice plate; and
  a fluid inlet for fluidly coupling the cartridge housing to the spraying apparatus, wherein the cartridge is configured such that fluid introduced into the cartridge housing through the fluid inlet acts to pressurise the reservoir.

Aptly, in a dosing mode, the cartridge housing is configured to receive water through the fluid inlet and the cartridge is configured to output liquid concentrate to the spraying apparatus through the fluid port.

Aptly, the orifice plate is removable from the cartridge.

Aptly, the orifice plate is configured to induce turbulence in the flow of liquid concentrate therethrough.

Aptly, the orifice of the orifice plate has a diameter of substantially between 50 and 150 microns. Aptly, the orifice plate has a thickness of between substantially 0.1 and 0.3 mm.

Aptly, the reservoir comprises a polymeric and/or elastomeric material.

Aptly, the cartridge housing comprises a portion that is at least partially transparent.

Aptly, the cartridge comprises an indicator element coupled to a lower portion of the reservoir, configured to indicate the relative positioning of the lower portion of the reservoir and the cartridge housing.

Aptly, the cartridge comprises a first fluid outlet, for fluidly coupling the reservoir to the spraying apparatus.

Aptly, the cartridge comprises a second fluid outlet, for fluidly coupling the cartridge housing to the spraying apparatus.

Aptly, the second fluid outlet has smaller cross-sectional area than the first fluid outlet.

Aptly, in a rinsing mode, the reservoir is configured to receive water through the fluid port.

Aptly, in the rinsing mode, the cartridge housing is configured to output water to the second fluid outlet and the reservoir is configured to output a mixture of water and liquid concentrate to the first fluid outlet.

Aptly, the cartridge comprises a sacrificial element, for preventing the cartridge from being configured in a rinsing mode.

Aptly, the cartridge housing comprises an upper surface, wherein the fluid port, the fluid inlet and the first and second fluid outlets are located in the upper surface.

Aptly, the cartridge housing comprises at least one protrusion, configured to interact with a manifold of the spraying apparatus.

Aptly, at least one of the fluid port, the fluid inlet and the first fluid and second fluid outlets comprise a septa cap.

Aptly, the cartridge comprises a channel extending between the reservoir and the fluid port, wherein the orifice plate is located within the channel.

Aptly, the channel comprises a bypass portion.

Aptly, the orifice plate is biased away from the bypass portion.

According to a second aspect of the invention there is provided a cartridge for attachment to a spraying apparatus for spraying a solution, the cartridge comprising:

a cartridge housing;
a reservoir for housing a liquid concentrate, wherein the reservoir is located within the cartridge housing;
a fluid port for fluidly coupling the reservoir to a spraying apparatus;
a fluid inlet for fluidly coupling the cartridge housing to the spraying apparatus, wherein the cartridge is configured such that fluid introduced into the cartridge housing through the fluid inlet acts to pressurise the reservoir; and
a first fluid outlet, for fluidly coupling the reservoir to the spraying apparatus wherein in a dosing mode, the cartridge housing is configured to receive water through the fluid inlet and the cartridge is configured to output liquid concentrate to the spraying apparatus through the fluid port,

wherein in a rinsing mode, the reservoir is configured to receive water through the fluid port and output a mixture of water and liquid concentrate to the first fluid outlet.

Aptly, the cartridge comprises a second fluid outlet, for fluidly coupling the cartridge housing to the spraying apparatus.

Aptly, in the rinsing mode, the cartridge housing is configured to output water to the second fluid outlet.

Aptly, the second fluid outlet has smaller cross-sectional area than the first fluid outlet.

Aptly, in the rinsing mode, the cartridge housing is configured to output water to the second fluid outlet.

Aptly, the cartridge comprises a sacrificial element, for preventing the cartridge from being configured in a rinsing mode.

Aptly, the cartridge comprises an orifice plate located between the reservoir and the fluid port, such that a flow of liquid concentrate from the reservoir to the spraying apparatus through the fluid port is directed through the orifice plate.

Aptly, the orifice plate is removable from the cartridge.

Aptly, the orifice plate is configured to induce turbulence in the flow of liquid concentrate therethrough.

Aptly, the orifice of the orifice plate has a diameter of substantially between 50 and 150 microns.

Aptly, the orifice plate has a thickness of between substantially 0.1 and 0.3 mm.

Aptly, the reservoir comprises a polymeric and/or elastomeric material.

Aptly, the cartridge housing comprises a portion that is at least partially transparent.

Aptly, the cartridge comprises an indicator element coupled to a lower portion of the reservoir, configured to indicate the relative positioning of the lower portion of the reservoir and the cartridge housing.

Aptly, the cartridge housing comprises at least one protrusion, configured to interact with a manifold of the spraying apparatus.

Aptly, the cartridge comprises a channel extending between the reservoir and the fluid port, wherein the orifice plate is located within the channel.

Aptly, the channel comprises a bypass portion.

Aptly, the orifice plate is biased away from the bypass portion.

According to a third aspect of the invention there is provided a manifold assembly of a spraying apparatus for coupling the spraying apparatus to a reservoir of liquid concentrate, the manifold assembly comprising:
a first layer and a second layer:

a fluid port, located in the second layer, for receiving liquid concentrate from a cartridge comprising a reservoir of liquid concentrate;
a fluid inlet, located in the first layer, for receiving water from the spraying apparatus; and
a fluid outlet, located in the first layer, for outputting a mixture of water and liquid concentrate to the spraying apparatus;

wherein the manifold assembly comprises a flow path between the fluid inlet and the fluid outlet, and wherein the flow path between the fluid inlet and the fluid outlet includes a mixing section fluidly connected to the fluid port and configured to mix liquid concentrate received from the fluid port with water received at the fluid inlet.

Aptly, the first and second layers are adjacent within the manifold assembly.

Aptly, at least a portion of the flow path between the fluid inlet and the fluid outlet is bounded by a surface of the first layer and a surface of the second layer

Aptly, the mixing section comprises a throttle portion.

Aptly, the throttle portion is configured such that flow therethrough draws liquid concentrate to the mixing section from the fluid port.

Aptly, the manifold assembly comprises a second fluid outlet, for outputting water to the cartridge.

Aptly, the manifold assembly comprises a flow path between the fluid inlet and the second fluid outlet.

Aptly, the manifold assembly further comprises a cartridge interface layer.

Aptly, the second fluid outlet is located in the cartridge interface layer of the manifold assembly.

Aptly, the second layer and the cartridge interface layer are adjacent within the manifold assembly.

Aptly, the manifold assembly has a dosing configuration, wherein in the dosing configuration the manifold assembly is configured to:

receive water at the fluid inlet;

output water through the second fluid outlet;

receive liquid concentrate in the mixing section; and

output a mixture of water and liquid concentrate to the spraying apparatus through the fluid outlet.

Aptly, the manifold assembly comprises a second fluid inlet, located in the cartridge interface layer of the manifold assembly, for receiving a mixture of water and liquid concentrate from the cartridge.

Aptly, the manifold assembly comprises a third fluid inlet, located in the cartridge interface layer of the manifold assembly, for receiving water from the cartridge.

Aptly, the manifold assembly comprises a rinse outlet, located in the first layer of the manifold assembly, for outputting a mixture of water and liquid concentrate to the spraying apparatus.

Aptly, the manifold assembly comprises a flow path between the second fluid inlet and the rinse fluid outlet.

Aptly, the manifold assembly comprises a flow path between the third fluid inlet and the rinse fluid outlet.

Aptly, the manifold assembly has a rinsing configuration, wherein in the rinsing configuration, the manifold assembly is configured to:

receive water at the fluid inlet;

output water through the fluid port;

receive a mixture of water and concentrate at the second fluid inlet; and

output a mixture of water and concentrate through the rinse fluid outlet.

Aptly, in the rinsing configuration, the manifold assembly is further configured to:

receive water at the third fluid inlet;

mix the water received at the third fluid inlet with the mixture of water and concentrate through the second fluid inlet prior to outputting a mixture of water and concentrate through the rinse fluid outlet.

Aptly, the manifold assembly comprises valve means to switch the manifold between the dosing configuration and the rinsing configuration.

Aptly, in the dosing configuration the flow path between the second fluid inlet and the rinse fluid outlet and the flow path between the third fluid inlet and the rinse fluid outlet are closed by the valve means.

Aptly, in the rinsing configuration the flow path between the fluid inlet and the second fluid outlet is closed by the valve means.

Aptly, in the rinsing configuration the flow path between the fluid inlet and the fluid outlet is closed at a position between the mixing section and the fluid outlet by the valve means.

Aptly, the valve means comprises a plurality of valves located in a layer of the manifold assembly.

Aptly, the valve means is located in a valve layer, adjacent the cartridge interface layer of the manifold assembly.

Aptly, in the dosing configuration a first combination of the plurality of valves is actuated, and in the rinsing configuration a second combination of the plurality of valves is actuated.

Aptly, the valve means are configured such that the first combination of the plurality of valves is actuated when the manifold assembly is coupled to a cartridge in a first configuration.

Aptly, the valve means are configured such that the second combination of the plurality of valves is actuated when the manifold assembly is coupled to a cartridge in a second configuration.

According to a fourth aspect of the invention there is provided an assembly for treating plant matter, comprising:

a spraying apparatus; and
a cartridge according to any the first or second aspects of the invention.

Aptly, the spraying apparatus includes a manifold assembly according to the third aspect of the invention, for coupling the spraying apparatus to the cartridge.

According to a fifth aspect of the invention there is provided an assembly for treating plant matter, comprising a spraying apparatus, the spraying apparatus comprising
a manifold assembly according to the third aspect of the invention.

Certain embodiments provide the advantage that an assembly (or components therefor) is provided that allows dilution of potentially harmful concentrated fluids in use rather than prior to use.

Certain embodiments provide the advantage that an assembly for treatment of plant matter, including a spraying apparatus, is provided that reduces the risk of user exposure to potentially harmful concentrated fluids.

Certain embodiments provide the advantage that a manifold assembly is provided that facilitates the flow of fluid, for example a liquid concentrate, from a reservoir of said fluid to a spraying apparatus.

Certain embodiments provide the advantage that the manifold assembly provides all the fluidic control between the reservoir and the spraying apparatus.

Certain embodiments provide the advantage that a cartridge is provided for attachment to a spraying apparatus, with the cartridge able to provide robust and consistent dosing of its contents.

Certain embodiments provide the advantage that a cartridge is provided that can be rinsed prior to removal from a spraying apparatus, thereby reducing the risk of user exposure to potentially harmful concentrated fluids.

For the avoidance of doubt, any of the features described herein apply equally to any aspect of the invention. Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one aspect or embodiment of the invention are applicable to all aspects or embodiments, unless such features are incompatible.

The invention will now be further described, by way of example only, with reference to the accompanying drawings, in which:

Figures 1a, 1b and 1c illustrate perspective views of components of an assembly for treating plant matter;
Figure 2 illustrates a side view of a spraying apparatus and a cartridge;
Figure 3 illustrates an exploded perspective view of the spraying apparatus of Figure 2;
Figures 4a and 4b illustrate further exploded perspective views of the spraying apparatus of Figure 3;
Figures 5 illustrates a side view of a manifold assembly;
Figures 6 illustrates a cross-section of the manifold assembly of Figure 5;
Figures 7 illustrates a cross-section of a cartridge in communication with the manifold assembly of Figure 5;
Figures 8 illustrates a cross-section of another cartridge;
Figures 9 and 10 illustrate a side view and a cross-section of another manifold assembly, respectively;
Figures 11 illustrates a cross-section of the manifold assembly of Figure 9 in communication with the cartridge of Figure 8;
Figure 12 illustrates a cross-section of another cartridge;
Figure 13 illustrates the flow regime through the manifold assembly of Figure 10;
Figure 14 illustrates a perspective view of another cartridge;
Figure 15 to 18 illustrate a cross-section / side view / perspective view / exploded cross-section of the cartridge of Figure 14, respectively;
Figures 19a and 19b illustrate a side view and cross section, respectively, of another manifold assembly in a dosing configuration;
Figures 20a and 20b illustrate Figures 19a and 19b, respectively, when the manifold assembly is in a rinsing configuration;
Figures 21a and 21b illustrate exploded perspective views of the manifold assembly of Figure 19a from top and bottom perspectives, respectively; and

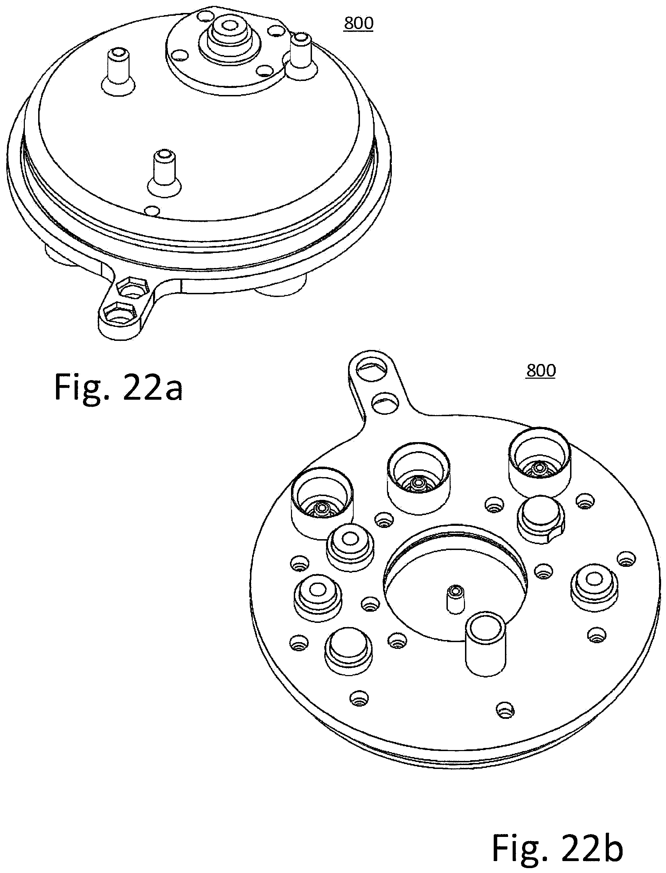

Figures 22a and 22b illustrate the manifold assembly shown in Figures 21a and 21b, respectively, in an unexploded view.

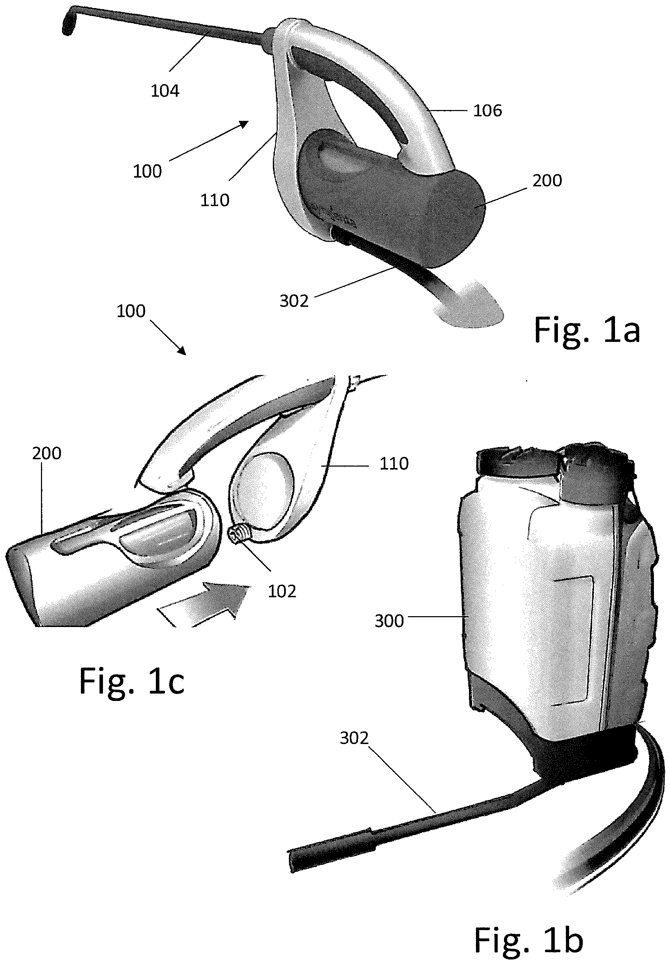

Referring now to Figures 1a and 1c, there is shown an assembly for treating plant matter. The assembly includes a spraying apparatus 100.

The spraying apparatus 100 includes a body portion 110. A lance 104 and a handle portion 106, to be gripped by a user during use, extend from the body portion 110. The spraying apparatus 100 includes a port 102 for connecting the spraying apparatus 100 to a tank or knapsack 300 via a tube or hose 302. The tank or knapsack 300 provides a reservoir of fluid, which in use is pressurised, for example by a manual or electric pump. In this example, the fluid supplied by the knapsack 300 is water. The pressurised fluid is then supplied to the spraying apparatus 100 via the tube or hose 302.

Upon actuation of the spraying apparatus 100 (for example by pressing a trigger or button (not shown) in the handle 106), the spraying apparatus 100 sprays the pressurised fluid through the lance. That is, in use the assembly treats plant matter by spraying the plant matter with a fluid. The plant matter to be treated may be a protected plant matter or a plant to be retained, which could also be termed a wanted, desired, or valued plant matter. Examples of such protected plant matter are crops, cultivated plants, cultivated grasses etc. (for example, lettuce, cabbage, carrot, potato, wheat). Alternatively, the plant matter to be treated may be an undesired plant matter, which could also be termed unwanted or unprotected. Examples of such undesired plant matter are weeds.

The assembly further includes a cartridge 200. As will be described further below, the cartridge 200 is configured to couple with the spraying apparatus 100 to provide the spraying apparatus with a supply of fluid for use in the treatment of the plant matter. The fluid supplied by the cartridge 200 is mixed within the spraying apparatus with the fluid supplied by the knapsack 300, before the mixture is sprayed on the plant matter to be treated. The fluid provided by the cartridge 200 may be any suitable fluid in accordance with the type of plant matter to be treated (i.e. the required treatment). That is, the fluid may be a fertilizer. Alternately, the fluid may be herbicide, for example paraquat.

The fluid provided by the cartridge is generally in a concentrated form, to be diluted within the spraying apparatus prior to use in treating plant matter (as will be described below). That is, the concentrate is mixed with the water from the knapsack in the spraying apparatus.

In the example shown in Figures 1a, 1b and 1c, the lance 104 extends from a front surface of the body portion 110 (i.e. a surface directed away from a user during use), with the cartridge 200 being received on a rear surface of the body portion 110. In this example, in use, the cartridge 200 is located underneath the handle portion 106 (i.e. underneath the user's hand). This arrangement provides suitable weight distribution for the user.

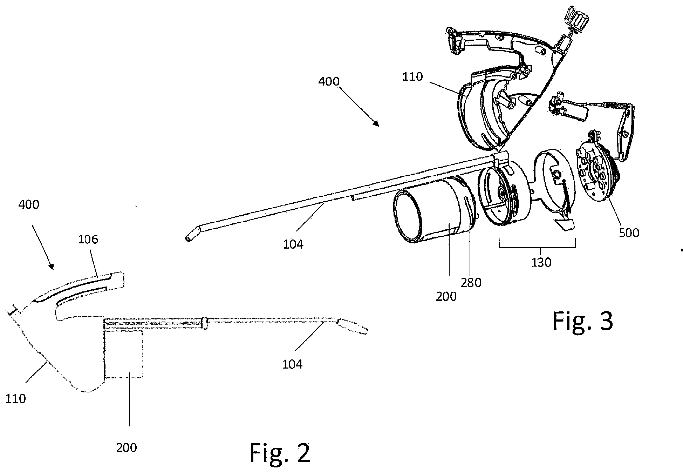

Figure 2 illustrates a spraying apparatus 400. The spraying apparatus 400 has corresponding features to the spraying apparatus 100. However, the spraying apparatus 400 is configured in an alternative manner to spraying apparatus 100 in that the cartridge 200 is received on a front surface of the body portion 100. That is, the lance 104 and the cartridge 200 extend from substantially the same surface of the body portion 110, such that the cartridge 200 extends away from a user during use. This arrangement is particularly advantageous in that the cartridge 200 can be easily viewed by a user during use, allowing the level of fluid within the cartridge 200 to be monitored (in a manner described in more detail later). Similarly to the previous example, the cartridge 200 is located underneath the handle portion 106 in use. That is, in this example the handle portion extends away from a user during use.

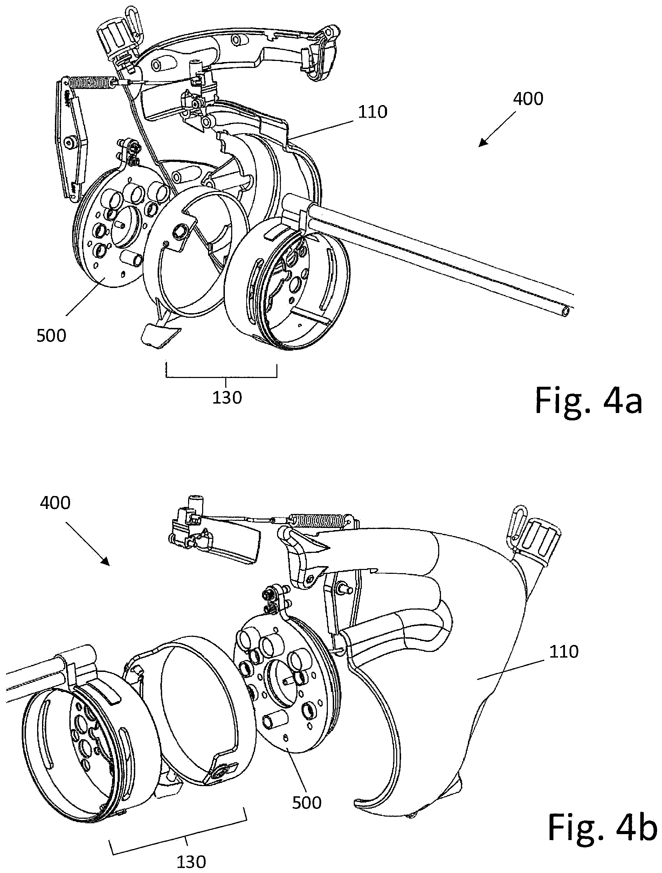

Figure 3, 4a and 4b illustrate exploded views of the spraying apparatus 400. In this example, the spraying apparatus 400 includes a manifold assembly 500. The manifold assembly 500 is configured to couple to the cartridge 200 (further details of this coupling will be provided later). In general, the coupling between the manifold assembly 500 and the cartridge 200 allows a fluid connection between the manifold assembly 500 and the cartridge 200, to allow fluid to be extracted from the cartridge 200 into the spraying apparatus 400.

In this example, the spraying apparatus 400 includes a mounting portion 130 for mounting the cartridge 200 within the spraying apparatus 400. The mounting portion 130 may be integral with the body portion 110 of the spraying apparatus, or as in this example, the mounting portion 130 may be a separate component (or a series of separate components) screwed or coupled to the body portion 110 of the spraying apparatus by a clip (not shown). The cartridge 200 may be mounted within the mounting portion 130 in any suitable manner. In the described examples, the cartridge is mounted within the mounting portion 130 using a pin and slot arrangement. That is, the cartridge includes slots 280, extending around portions of the cartridge circumference, which interact with a pin/protrusion within the mounting portion 130. In other words, the cartridge is screwed into the mounting portion 130.

In this example, the mounting portion 130, also receives the manifold assembly 500. As the cartridge 200 is received within the mounting portion 130, the cartridge 200 engages and couples with the manifold assembly 500. The manifold assembly 500 may be received/mounted within the mounting portion 130 in any suitable way, for example it may be screwed in or welded/adhered to the mounting portion 130.

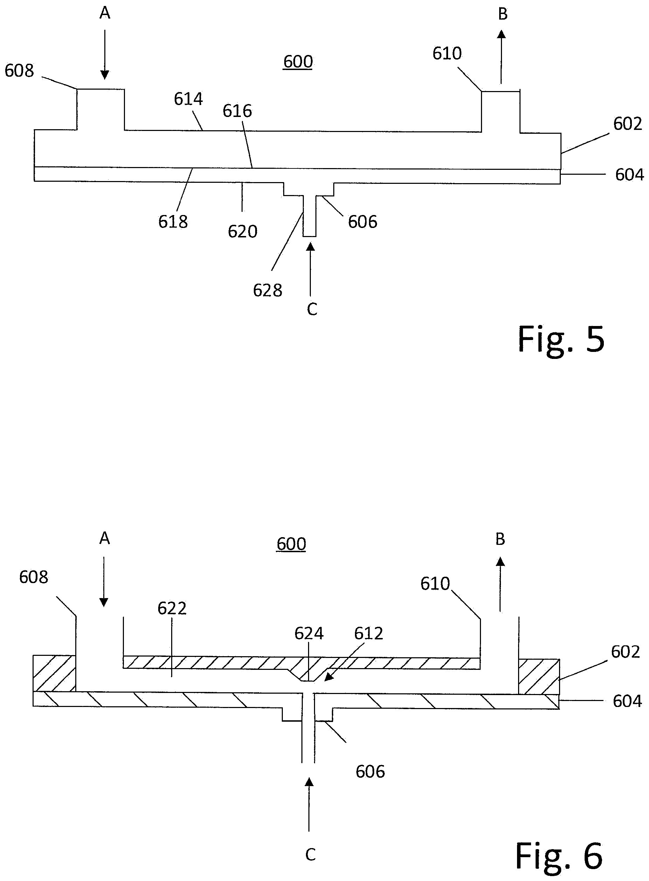

Figure 5 illustrates a side view of an example of a manifold assembly 600. The manifold assembly includes a first layer 602. The first layer 602 includes a first surface 614 and a second surface 616. The manifold assembly 600 further includes a fluid inlet 608 and a fluid outlet 610 located in the first layer 602. In this example, the fluid inlet 608 and fluid outlet 610 extend from the first surface 614 of the first layer 602 (in this example in a substantially perpendicular direction).

When the manifold assembly 600 is mounted within the spraying apparatus (i.e. as part of the spraying apparatus) the fluid inlet 608 and fluid outlet 610 are configured to couple with flow channels within the spraying apparatus. Specifically, the fluid inlet 608 is configured to receive water from the spraying apparatus. In other words, the water received by the spraying apparatus from a knapsack, will be directed within the spraying apparatus and directed into the fluid inlet 608 in the direction indicated by arrow A. The fluid outlet 610 is configured to output a fluid from the manifold assembly 600 to the spraying apparatus. That is, the fluid outlet 610 is configured to output a mixture of water and liquid concentrate to the spraying apparatus in the direction indicated by arrow B.

The manifold assembly includes a second layer 604. The second layer 604 includes a first surface 618 and a second surface 620. A fluid port 606 is located in the second layer 604, for receiving liquid concentrate from the cartridge 200. In this example, the fluid port 606 extends from the second surface 620 of the second layer (in this example in a substantially perpendicular direction), such that the fluid port 606 is configured to receive liquid concentrate from the cartridge 200 in the direction as indicated by arrow C.

In the example illustrated in Figure 5 the first and second layers 602, 604 are adjacent within the manifold assembly 600. That is, the first layer 602 and second layer 604 are abutting layers, abutting in a manner which allows the layers to extend parallel to each other. Specifically, the second surface 616 of the first layer 602 abuts the first surface 618 of the second layer 604.

In this example, the first layer 602 is a body portion interface layer. In other words, the first layer 602 forms the layer of the manifold assembly 600 that interfaces the body portion of the spraying apparatus. In other words, as the manifold assembly 600 is received within the body portion of the spraying apparatus (for example via a manifold mount) the first layer 602 (via the fluid inlet 608 and the fluid outlet 610) interacts with the body portion of the spraying apparatus. In this example, the second layer 604 is a cartridge interface layer. In other words, the second layer 604 forms the cartridge interface side of the manifold assembly 600, such that as the cartridge is received by the manifold assembly 600 the second layer 604 engages/interacts with the cartridge.

Figure 6 illustrates a cross-section of Figure 5. A flow path is defined between the fluid inlet 608 and the fluid outlet 610. That is, water received in the fluid inlet 608 can flow through the manifold assembly 600 and out of the fluid outlet 610. In embodiments of the manifold assembly 600, at least a portion of the flow path between the fluid inlet 608 and the fluid outlet 610 is bounded by a surface of the first layer 602 and a surface of the second layer 604. In this example the flow path is defined by channel 622. Channel 622 is integral within the first layer 602 and bounded by the first surface 618 of the second layer 604. In other words, the flow path between the fluid inlet 608 and the fluid outlet 610 is built into the first layer 602.

The flow path between the fluid inlet 608 and the fluid outlet 610 includes a mixing section 612 fluidly connected to the fluid port 606. In this example, the mixing section 612 includes a throttle portion 624. The throttle portion 624 is configured such that flow therethrough draws liquid concentrate to the mixing section 612 from the fluid port 606 (i.e. from the cartridge as described below).

The mixing section 612 is configured to mix liquid concentrate received from the fluid port 606 with water received at the fluid inlet 608. That is, the mixing section 612 is configured to facilitate the mixing of liquid concentrate received from the fluid port 606 with water received at the fluid inlet 608 by virtue of receiving them in a common section. In other words, in this example there is no physical mixing means.

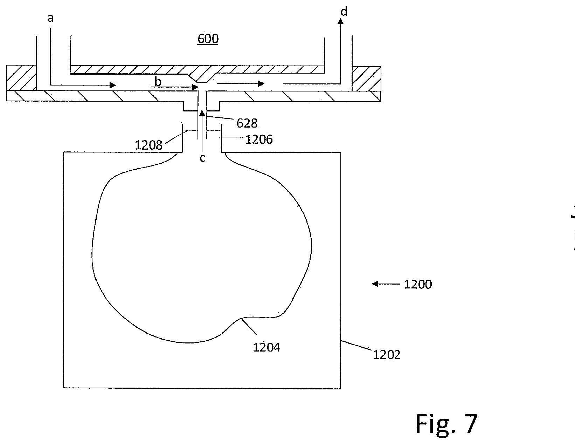

Figure 7 illustrates the manifold assembly 600 coupled to a cartridge 1200. As the cartridge 1200 is brought towards the manifold assembly 600, an upper portion of the cartridge 1200 (as shown in Figure 7) is inserted into the spraying apparatus by a user until it engages and couples with the manifold assembly 600.

As shown in Figure 7, during general operation in a dosing configuration (that is, in a configuration where the manifold assembly 600 can extract liquid concentrate from cartridge), the manifold assembly 600 is configured to receive water at the fluid inlet 608 (as shown by arrow a); receive liquid concentrate in the mixing section 612; and output a mixture of water and liquid concentrate to the spraying apparatus through the fluid outlet 610 (as shown by arrow d). Water enters the fluid inlet 608 at a first pressure. As the water flows through the throttle (as shown by arrow b), the velocity of water increases (due to conservation of mass flow). As the water speeds up through the throttle portion 624 the pressure decreases (due to the Venturi effect). Turbulent flow is induced in the throttle as the flow accelerates therethrough. As the flow is turbulent, the pressure differential, ΔP, between the non-throttle portion of the channel 622 and the throttle portion is substantially proportional to the flow rate, Q through the flow path:

$$Q \sim \propto \sqrt{\Delta P}$$

The local reduction in pressure through the throttle portion 624 creates a pressure differential between the throttle portion 624 and the interior of the cartridge 1200 (i.e. a reservoir of liquid concentrate therein) to draw the liquid concentrate from the interior of the cartridge 1200 through the fluid port 606 (as shown by arrow c) and into the mixing section 612. The turbulent flow induced in the throttle portion 624 acts to mix the liquid concentrate with the water to produce a mixture thereof. The mixture of water and liquid concentrate (i.e. the diluted substance) travels along the flow path and out of the fluid outlet 610 (as shown by arrow d).

In this example, the cartridge 1200 includes a cartridge housing 1202 and a reservoir 1204 for housing a liquid concentrate, the reservoir being located within the cartridge housing. In addition, the cartridge 1200 includes a cartridge fluid port 1206 for fluidly coupling the reservoir 1204 to the spraying apparatus (i.e. via the fluid port 606 of the manifold assembly 600).

In this example, the fluid port 606 of the manifold assembly includes a needle or needle-like connection 628 for coupling the fluid port 606 to the cartridge 1200. That is, the fluid port 606 is configured to receive liquid concentrate from the cartridge via a needle or needle-like connection. In this example, the fluid port 1206 of the cartridge 1200 is a septa cap. That is, the fluid port 120 includes a rubber cap or membrane 1208. When the cap or membrane is pierced by the needle 628 the manifold assembly 600 becomes fluidly coupled with the cartridge 1200, and in particular the reservoir 1204. Upon removal of the needle 628, the elastomeric nature of the cap/membrane causes it to re-seal the needle hole. It should be noted that the needle-septa cap coupling shown in Figure 7 is not necessarily illustrated to scale.

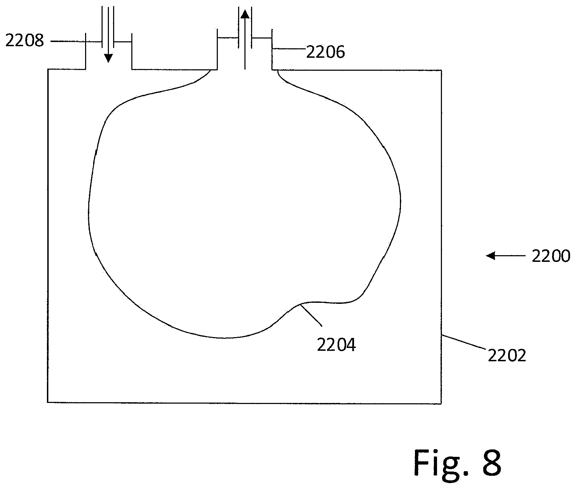

In certain embodiments, to assist in creating a pressure differential between the throttle portion and the interior of the reservoir 204, the cartridge may include means for providing a back-pressure to the reservoir. Figure 8 illustrates a cartridge 2200, with means for providing a back-pressure to the reservoir 2204. Corresponding features between the cartridge 2200 and cartridge 1200 are indicated by the prefix 2-.

The cartridge 2200 includes a cartridge fluid inlet 2208 for fluidly coupling the cartridge housing 2202 to the spraying apparatus (i.e. the manifold assembly thereof). The cartridge 2200 is configured such that fluid introduced into the cartridge housing 2202 through the cartridge fluid inlet 2208 acts to pressurise the reservoir 2204. In other words, the fluid introduced into the cartridge housing 2202 provides a back-pressure on the reservoir 2204.

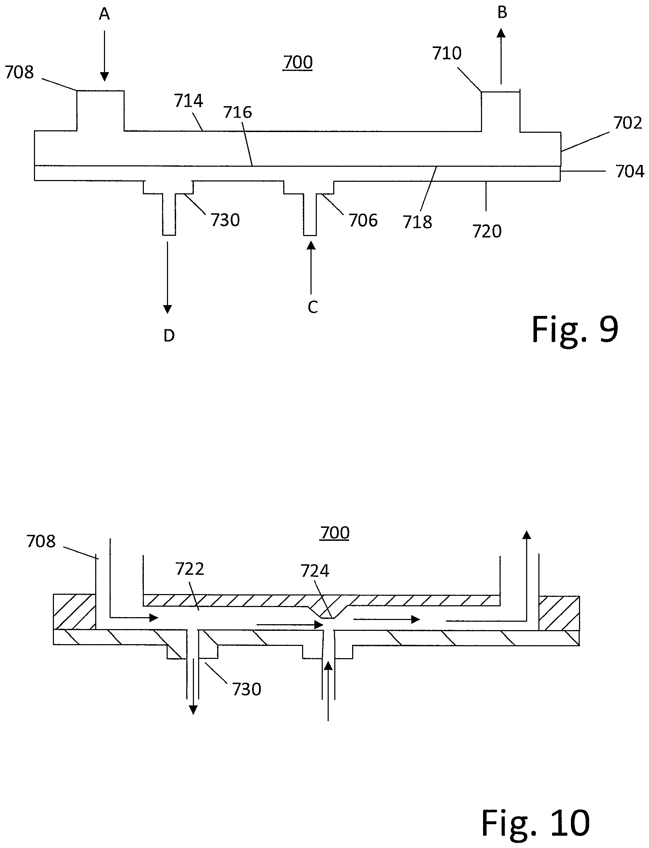

Figure 9 illustrates another manifold assembly 700. The manifold assembly 700 has corresponding features to the manifold assembly 600 (as noted by the prefix 7-). However, the manifold assembly 700 includes a second fluid outlet 730, for outputting water to the cartridge. The manifold assembly 700 is suitable for coupling with the cartridge 2200 of Figure 8.

In this example, the second fluid outlet 730 is located in the second layer 704. In this example, the second fluid outlet 730 extends from the second surface 720 of the second layer 704 (in this example in a substantially perpendicular direction), such that the second fluid outlet 730 is configured to output water to the cartridge 2200 in the direction as indicated by arrow D.

Figure 10 illustrates a cross-section of the manifold assembly 700 of Figure 9. As illustrated, the manifold assembly 700 includes a flow path between the fluid inlet 708 and the second fluid outlet 730. In this example, the flow path between the fluid inlet 708 and the second fluid outlet 730 is at least partially along channel 722 (i.e. the flow path between the fluid inlet 708 and the second fluid outlet 730 and the flow path between the fluid inlet 708 and the fluid outlet 710 are partially coincident).

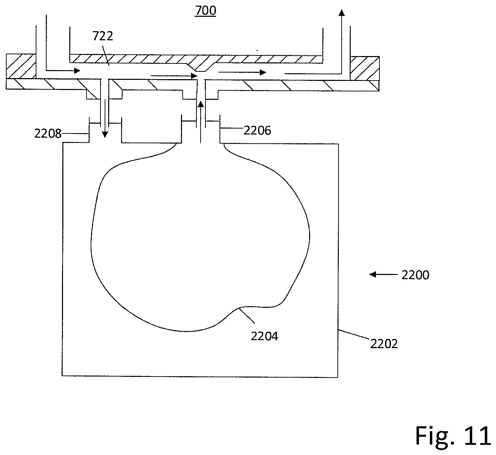

Figure 11 illustrates a cross-section of the manifold 700 coupled to the cartridge 2200. In this example, the second fluid outlet 730 includes a needle or needle-like connection, for coupling the second fluid outlet 730 to the cartridge 2208. In this example the cartridge fluid inlet 2208 is a septa cap, similarly to the fluid port 2206.

In a dosing operation, the manifold assembly 700 is configured to receive water at the fluid inlet 708 and output water through the second fluid outlet 730. The cartridge housing 2202 is configured to receive water through the fluid inlet 2208 (from the second fluid outlet 730 of the manifold assembly) and the cartridge 2200 is configured to output liquid concentrate to the spraying apparatus through the fluid port 2206. The manifold assembly 700 is configured to receive the liquid concentrate in the mixing section 724 from the fluid port 2206. A mixture of water and liquid concentrate is then outputted through the fluid outlet 710 to the spraying apparatus.

During this operation, the back-pressure provided by the fluid introduced through fluid inlet 2208 acts to increase the pressure of the concentrate in the reservoir 2204. In turn, the pressure differential between the concentrate in the reservoir 2204 and the throttle portion 724 also increases, such that an increased amount of concentrate can be drawn from the reservoir 2204 for a given flow rate through the throttle portion 724.

In this example, the manifold assembly 700 may include means to regulate the back-pressure in the cartridge housing. For example, the manifold assembly 700 may include valve means, which prevents the introduction of further water into the cartridge housing 2202 when the pressure within the cartridge housing reaches a threshold level. Alternatively, the manifold assembly may include a back-water release channel, to allow back-water to exit the cartridge housing 2202 back into the manifold assembly 700 when a threshold level is reached.

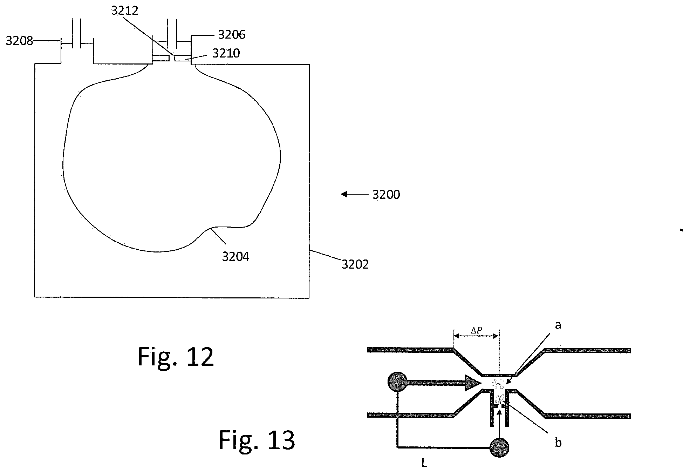

Figure 12 illustrates another cartridge 3200. In the same manner as cartridge 2200, the cartridge 3200 includes a cartridge housing 3202, a reservoir 3204 located within the cartridge housing 3202 for housing a liquid concentrate, a fluid port 3206 for fluidly coupling the reservoir to a spraying apparatus and a fluid inlet 3208 for fluidly coupling the cartridge housing 3202 to the spraying apparatus. The cartridge 3200 also includes an orifice plate 3210 located between the reservoir and the fluid port. The orifice plate 3210 is positioned such that a flow of liquid concentrate from the reservoir 3204 to the spraying apparatus through the fluid port 3206 is directed through the orifice plate 3210. The orifice plate, put simply, is a plate with an orifice or restriction 3212 extending through the plate to allow flow to progress from one side of the plate to the other.

In the previously described arrangements, flow from the reservoir to the throttle portion remains laminar. The relationship between flow rate and pressure differential for laminar flow is different to that of turbulent flow (given above). In this manner, a given change in pressure differential will produce a larger change in flow rate in a turbulent flow than in a laminar flow. The back-pressure provides a link between the pressure differential through the throttle portion and the pressure differential between the reservoir and the throttle portion (described more later). As such, these pressure differentials are substantially equal (or at least directly proportional). However, as the flow from the reservoir to the throttle portion is generally laminar, in contrast to the turbulent flow through the throttle portion, the corresponding flow rates will not change to the same extent for a given change in the pressure differential. That is, a doubling in the flow rate through the throttle portion may only result in a 50% increase in the flow from the reservoir to the throttle portion. Hence the ratio of liquid concentrate to water in the mixture outputted from the manifold assembly 700 will change as the flow rate through the throttle portion 724 changes. Such a change in flow rate may result from a reduction/increase in pressure of the fluid entering the spraying apparatus from the knapsack.

Cartridge 3200 operates in substantially the same manner as cartridge 2200. The operation differs in that the orifice plate 3210 ensures that the flow through the fluid port 3206 is turbulent. In the same manner as above, the pressure differential across the throttle portion and the pressure differential from the reservoir 3204 to the throttle portion are linked by the back pressure (as illustrated by line L in Figure 13). In this case, as the flow regime through the throttle portion and from the reservoir 3204 to the throttle portion are both turbulent the flow rates will vary proportionally as the substantially common (or at least proportional) pressure differential changes. As such, the ratio between liquid concentrate and water in the mixture outputted through the fluid outlet remains constant. That is, by ensuring that the flow through the fluid port 3206 is turbulent (i.e. at point b of Figure 13), similarly to the flow through the throttle portion (i.e. point a of Figure 13), the 'dose' supplied from the cartridge remains constant.

The orifice plate 3210 is configured to induce turbulence in the flow of liquid concentrate therethrough. That is, the dimensions of the orifice plate ensure the flow through the orifice are at a Reynolds number suitable for turbulent flow. In this example, the orifice 3212 of the orifice plate 3210 has a diameter of substantially 100 microns. Aptly the orifice 3212 of the orifice plate 3210 has a diameter of between 50 and 150 microns. It should be noted that the diameter of the orifice 3212 of the orifice plate 3210 is illustrated in such a way to make the figures clear. In practice the orifice 3212 may be much smaller than indicated in the figures. In this example, the orifice 3212 of the orifice plate 3210 has a thickness of substantially 0.2mm. Aptly, the thickness of the orifice plate 3210 is between 0.1 and 0.3 mm. Having an orifice plate with a small thickness in this manner, ensures the flow regime substantially follows that of flow through an orifice as opposed to flow through a pipe.

In this example, the orifice plate 3210 has a diameter substantially 10mm. Aptly, the orifice plate may have a diameter of 8 to 12 mm.

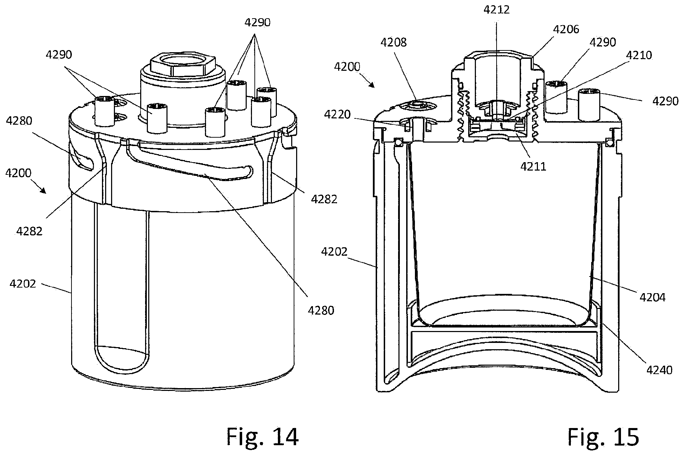

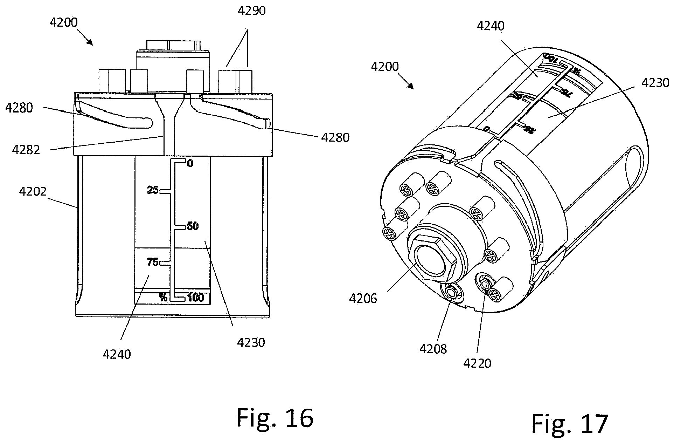

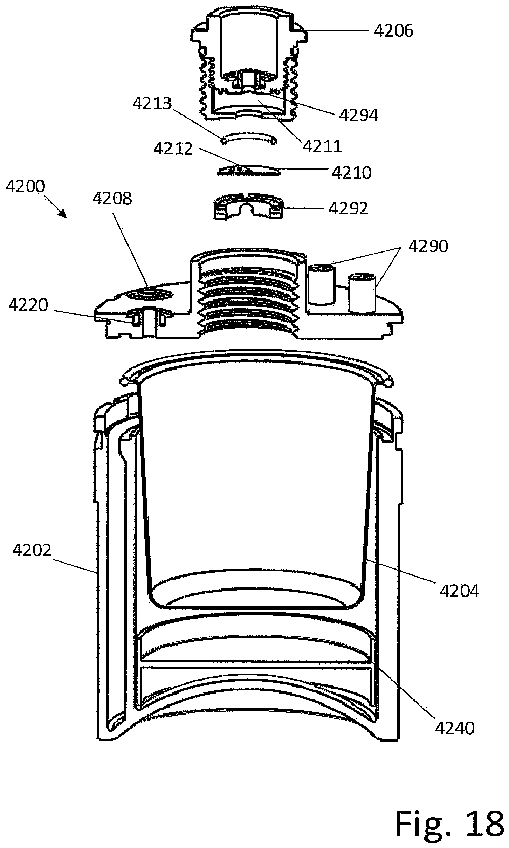

Figures 14 to 18 illustrate a cartridge 4200. Corresponding features to previous cartridges are numbered similarly with a prefix 4-. In this example, the cartridge 4200 has a dosing mode and a rinsing mode. That is, the cartridge 4200 has mode to provide a dose (i.e. a dose of concentrated fluid from the reservoir) and a mode to provide a rinse (i.e. a mode in which the cartridge may be rinsed).

In this example, the cartridge 4200 includes a first fluid outlet 4220, for fluidly coupling the reservoir 4204 to the spraying apparatus. The cartridge includes a second fluid outlet (not shown in the Figures), for fluidly coupling the cartridge housing to the spraying apparatus.

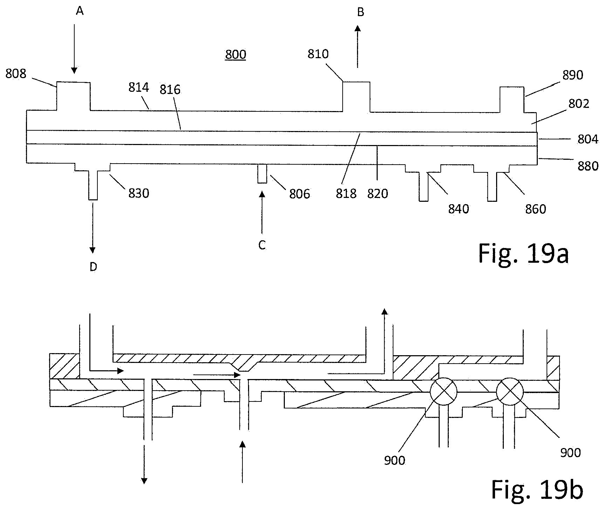

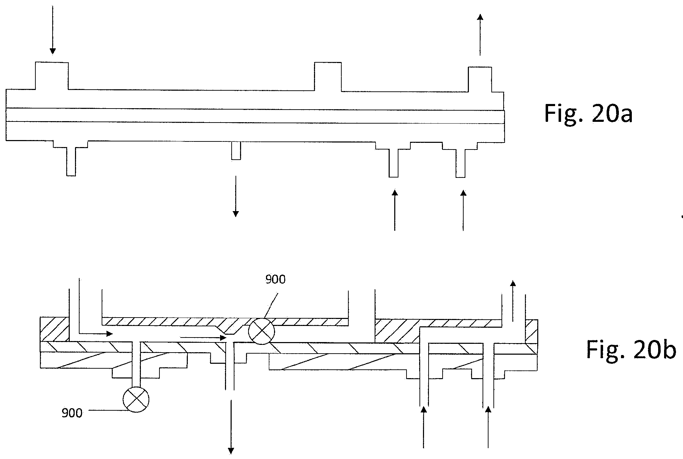

Figures 19a, 19b, 20a and 20b illustrate another manifold assembly 800. The manifold assembly 800 has corresponding features to previously described manifold assemblies noted with a prefix 8-. The manifold assembly 800 is configured to receive/interact with the cartridge 4200. In this example, the manifold assembly 800 includes a second fluid inlet 840, for receiving a mixture of water and liquid concentrate from the cartridge. The manifold assembly also includes a third fluid inlet 860, for receiving water from the cartridge.

In this example the manifold assembly 800 includes a cartridge interface layer 880 separate from the second layer 804. The second layer 804 and the cartridge interface layer 880 are adjacent within the manifold assembly 800. That is, the second layer 804 and the cartridge interface layer 880 are abutting layers, which abut in a manner which allows the layers to extend parallel to each other.

The second fluid outlet 830 is located in the cartridge interface layer 880 of the manifold assembly 800. In this example, the second fluid inlet 840 and the third fluid inlet 860 are also located in the cartridge interface layer 880 of the manifold assembly 800.

The manifold assembly 800 includes a rinse outlet 890, for outputting a mixture of water and liquid concentrate to the spraying apparatus. The rinse fluid outlet 890 is located in the first layer 802 of the manifold assembly 800.

The manifold assembly 800 includes a flow path between the second fluid inlet 840 and the rinse fluid outlet 890, as shown Figures 19b and 20b. The manifold assembly also includes a flow path between the third fluid inlet 860 and the rinse fluid outlet 890. In this example, the flow path between the second fluid inlet 840 and the rinse fluid outlet 890 and the flow path between the third fluid inlet 860 and the rinse fluid outlet 890 share a common portion. That is, fluid received at the second and third fluid inlets 840, 860 will mix prior to output through the rinse fluid outlet 890.

The manifold assembly 800 has dosing and rinsing configurations. That is, as with previously described manifold assemblies the dosing configuration of the manifold assembly is such that the manifold assembly 800 is configured to receive water at the fluid inlet 808 and output water through the second fluid outlet 830. The cartridge housing 4202 is configured to receive water through the fluid inlet 4208 (from the second fluid outlet 830 of the manifold assembly) and the cartridge 4200 is configured to output liquid concentrate to the spraying apparatus through the fluid port 4206. The manifold assembly 800 is configured to receive the liquid concentrate in the mixing section 824 from the fluid port 4206. A mixture of water and liquid concentrate is then outputted through the fluid outlet 810 to the spraying apparatus. The flow through the manifold assembly 800 in the dosing configuration is shown in Figures 19a and 19b.

In the rinsing configuration the manifold assembly 800 is configured to receive, redistribute and output fluid from the knapsack and cartridge 4200 in a manner, which rinses at least the reservoir 4204 in the cartridge. In other words, in the rinsing configuration (with the cartridge being in a rinsing mode), the manifold assembly 800 is configured to receive water at the fluid inlet 808 and output water through the fluid port 806. The cartridge reservoir 4204 is configured to receive water through the fluid port 4206 (from the fluid port 806) and output a mixture of water and liquid concentrate to the first fluid outlet 4220. That is, the water introduced into the cartridge reservoir 4204 mixes with any remaining liquid concentrate before being outputted through the first fluid outlet 4220 (i.e. remaining liquid concentrate is 'rinsed').

The manifold assembly 800 receives the mixture of water and concentrate at the second fluid inlet 840 (from the first fluid outlet 4220 of the cartridge) and outputs the mixture of water and concentrate through the rinse fluid outlet 890. In this manner, remaining liquid concentrate within the reservoir 4204 can be removed prior to detaching the cartridge 4200 from the spraying apparatus.

In this example, the water in the cartridge housing 4202, which provides back-pressure on the reservoir, is also rinsed. In other words, in the rinsing configuration, the cartridge housing 4202 is configured to output water through the second fluid outlet. The manifold assembly receives the water at the third fluid inlet 860 and mixes the water received at the third fluid inlet 860 with the mixture of water and concentrate through the second fluid inlet 840 prior to outputting a mixture of water and concentrate through the rinse fluid outlet 890. The flow paths for this rinsing operation are shown in Figures 20a and 20b.

Although it is not necessary to rinse / clean the cartridge housing 4202, as it contains only uncontaminated back-pressure water, the described rinse operation allows the rinse flow rate of liquid concentrate to be controlled. Specifically, the water introduced through the fluid port 4206 acts to fill up the reservoir 4204. At a given moment, the back-pressure from the water in the cartridge housing 4202 acts to resist the filling up of the reservoir. The system seeks to reach a pressure equilibrium between the reservoir and the back-pressure water. Flow out of both the second fluid outlet (i.e. the back-pressure water rinse channel) and the first fluid outlet 4220 (concentrate rinse channel) acts to try and maintain equilibrium (at a given moment).

The flow rate out of each of the back-water rinse channel 4220 and the concentrate rinse channel depends on their relative size. That is, if one of the channels is larger, more flow will go through it relative to the other channel. Similarly, if one of the channels is smaller, less flow will go through it relative to the other channel. In other words, flow rate out of each channel is generally proportional to area of channel. In this example, the second fluid outlet has smaller cross-sectional area than the first fluid outlet 4220. That is, the second fluid outlet is constricted relative to the first fluid outlet 4220.

By constricting the second fluid outlet, with the system trying to adjust to reach a pressure equilibrium, the back-pressure water can flow out less quickly relative to the flow of concentrate rinse out of the first fluid outlet 4220. The restricted flow rate of back-pressure water out of the cartridge housing 4202 ensures that the rate at which the reservoir can fill up is also limited. That is, the volume of fluid held within the reservoir 4204 can only increase in accordance with the amount of back-pressure water that is being allowed to leave the cartridge housing. In this manner, the ratio of the amount of flow acting to 'fill-up' the reservoir, and the amount of flow rinsing the reservoir (i.e. exiting the reservoir). For example, for 100% of water flow into reservoir, approximately 10% acts to fill up the reservoir (i.e. forces the back-water rinse out), approximately 90% of the flow may exit the reservoir as concentrate rinse.

For a single-use cartridge, the rinse operation may be undertaken when the cartridge is empty, i.e. when the reservoir within the cartridge is substantially empty of liquid concentrate. To commence rinsing, the manifold assembly 800 is put into its rinse configuration and the cartridge 4200 may then be rinsed. Once rinsed the cartridge may be removed from the spraying apparatus and disposed of.

As eluded to above, as the rinse operation is undertaken the reservoir slowly fills as water is introduced therein. The time taken for the reservoir to go from empty of liquid concentrate to full (of water and increasingly diluted liquid concentrated) during a rinse operation is termed the 'rinse time'. The rinse time may be controlled by controlling the relative sizes of the first and second fluid outlets of the cartridge. That is, for a given size of first fluid outlet 4220, as the size of the second fluid outlet decreases, the rinse time becomes longer. As the rinse time increases, so does the 'rinse volume', i.e. the volume of water that passes through the reservoir during the rinse operation. As such, the rinse volume can be controlled by varying the ratio of the cross-sectional area of the second fluid outlet, to that of the first fluid outlet.

It would be understood, that an appropriate rinse time/volume will be dependent on the liquid concentrate in the reservoir and the concentration of the liquid concentrate. That is, an acceptable rinse time/volume may be that which reduces the residual concentrate to within a pre-determined threshold where potential exposure to a user is considered low.

In an example where the liquid concentrate is paraquat at a concentration of between 100 and 250g paraquat ion/litre, the second fluid outlet may have a cross-sectional area that is substantially 1.5 to 4.5 times smaller than the cross-sectional area of the first fluid outlet 4220. In this manner the flow rate through the second fluid outlet is 1.5 to 4.5 times slower than the flow rate through the first fluid outlet 4220. This configuration is determined, such that for a typical flow rate (for example between 1 and 3 l/min) from the manifold assembly into the reservoir, the reservoir has been rinsed with a volume of water that is approximately 1.5 to 4.5 times that of the cartridge. In other words, a volume of water 1.5 to 4.5 times that of the cartridge has passed through the reservoir. Aptly, the second fluid outlet may have a cross-sectional area that is substantially 3 times smaller than the cross-sectional area of the first fluid outlet, such that the reservoir is rinsed with a volume of water substantially 3 times that of the cartridge. A typical cartridge may have an internal volume of between 100 and 300 ml. Aptly, a cartridge may have an internal volume of between 200 and 250 ml. In embodiments, the maximum capacity of the reservoir is substantially equal to that of the cartridge itself (i.e. with a small difference to allow back-pressure water to be introduced).

In this example, the cartridge housing 4202 comprises a portion that is at least partially transparent 4230. In this manner, a user can visually monitor the reservoir 4204 during a rinsing operation to see when the reservoir is full (and hence when the rinse is complete).

In this example, the cartridge includes an indicator element 4240 coupled to a lower portion of the reservoir 4204. The indicator element 4240 is configured to indicate the relative positioning of the lower portion of the reservoir and the cartridge housing. That is, the indicator portion 4240 is configured to indicate to a user when the reservoir is 'full'. 'Full' may not necessarily require the reservoir to be at its maximum capacity. 'Full' may just be the level at which desired rinse volume has been completed (i.e. when a predetermined volume of water has passed through the reservoir).

The relative cross-sectional areas of the first and second fluid outlets in this cartridge are specifically configured such that the reservoir completely fills up (i.e. the indicator element 4240 reaches the bottom of the cartridge) when 3 times the volume of the cartridge has passed through the reservoir (considered to be a suitable rinse). That is, a user knows when the cartridge indicator reaches the bottom of the cartridge that a rinse of 3 times the volume of the cartridge has completed.

In this example, the indicator element 4240 is a puck element, adhered to a lower portion (i.e. underside) of the reservoir 4204. In this example the indicator element 4240 has a cross-sectional profile, substantially equal to that of the interior of the cartridge housing 4202. In this manner, as the indicator element traverses through the cartridge housing (i.e. as the volume of fluid within the reservoir increases/decreases) the indicator element 4240 will traverse with the lower portion of the reservoir, whilst remaining level within the cartridge housing 4202.

The transparent portion of the cartridge (or a portion adjacent to the transparent portion) may include markings to indicate to a user when the reservoir is 'full', i.e. when the rinse is complete. In other words, the indicator element is used as a metering device so that a user can visually assess the status of the rinse.

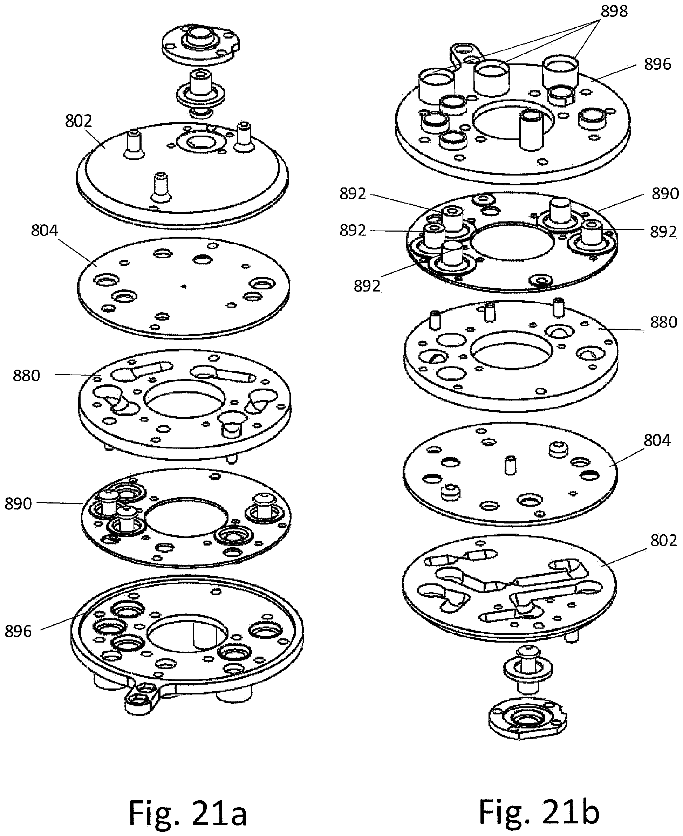

In this example, the manifold assembly 800 includes valve means to switch the manifold between the dosing configuration and the rinsing configuration. In this example, the valve means includes a plurality of valves 892 located in a layer of the manifold. The valves are operable to open/close the appropriate flow path to direct flow where necessary to achieve the dosing/rinsing functionality. In this example, the valve means is located in a valve layer 890, adjacent the cartridge interface layer 880 of the manifold assembly (the valve layer 890 is not shown in Figures 19a, 19b, 20a and 20b for clarity). It should be noted that in this example, the valve layer overlies the cartridge interface layer 880 such that the cartridge interface layer 880 interfaces with the cartridge via the inlets/outlets. Figures 21a and 21b illustrate an exploded view of the manifold assembly in opposing orientations, including the valve layer 890.

In this example, each of the plurality of valves 892 is integral with the valve layer 890 of the manifold assembly. Each valve 892 is a protrusion extending from a surface of the valve layer 890. Upon application of a force, each valve 892 can be inverted (i.e. pushed through the valve layer 890 until it at least partially extends from the opposing surface of the valve layer 890). When inverted, each valve 892 can block or redirect flow in a flow path in an underlying layer.

Figures 19a and 19b illustrate the manifold assembly 800 in a dosing configuration. In the dosing configuration the flow path between the second fluid inlet 840 and the rinse fluid outlet 890 and the flow path between the third fluid inlet 860 and the rinse fluid outlet 890 are closed by the valve means. That is, as illustrated schematically in Figure 19b, each flow path is closed by a valve 900. It would be understood that in other embodiments the flow paths may be closed by a single valve.

Figures 20a and 20b illustrate the manifold assembly 800 in a rinsing configuration. In the rinsing configuration the flow path between the fluid inlet 808 and the second fluid outlet 830 is closed by the valve means, i.e. a valve 900, as illustrated schematically in Figure 20b. Similarly, in the rinsing configuration the flow path between the fluid inlet 808 and the fluid outlet 810 is closed at a position between the mixing section and the fluid outlet 810 by the valve means, i.e. a valve 900.

In other words, in the dosing configuration a first combination of the plurality of valves 900 is actuated, and in the rinsing configuration a second combination of the plurality of valves 900 is actuated.

The mode of the cartridge 4200 at a particular time is dictated by the inlets/ports through which fluid is received from the manifold assembly. In other words, the cartridge 4200 is configured to either provide a dose or to be rinsed according to the fluid received from the corresponding manifold assembly. Similarly, the configuration (i.e. dosing or rinsing) of the manifold assembly at a particular time is dictated by the manner in which it is coupled to the cartridge. Specifically, the valves of the manifold assembly 800 that are actuated is determined by the way in which the manifold assembly is coupled to the cartridge 4200. In other words, the valve means are configured such that the first combination of the plurality of valves is actuated when the manifold assembly is coupled to a cartridge in a first configuration. In addition, the valve means are configured such that the second combination of the plurality of valves is actuated when the manifold assembly is coupled to a cartridge in a second configuration.

In this example, the cartridge housing comprises at least one protrusion 4290, configured to interact with the manifold assembly 800. In this example, a plurality of protrusions 4290 extend from an upper surface of cartridge housing (i.e. a lid portion of the cartridge housing). The protrusions 4290 are configured to interact with the plurality of valves of the manifold layer. That is, the protrusions are configured to actuate the first/second combination of the plurality of valves, depending on the relative configuration between the cartridge and the manifold assembly. In other words, as the cartridge is brought into engagement with the manifold assembly, some of the protrusions may correspond spatially to a valve on the manifold assembly and will apply a force and hence invert the corresponding valve.

To bring the cartridge 4200 into a dosing mode (and hence to bring the manifold assembly into a dosing configuration), the cartridge 4200 is mounted within the mounting portion in a first manner. In this example, the first manner is similar to that previously described, in that the cartridge includes slots 4280, extending around portions of the circumference of the cartridge, which interact with a pin/protrusion on/within the mounting portion 130. In this example, as the cartridge is brought into engagement with the manifold assembly in the first manner, a first combination of protrusions will engage with the first combination of the plurality of valves.

To bring the cartridge 4200 into a rinsing mode (and hence to bring the manifold assembly into a rinsing configuration) the cartridge 4200 is mounted within the mounting portion in a second manner. In this example, in the second manner the cartridge is mounted within the mounting portion in a push fit manner. That is, the cartridge 4200 includes channel 4282 on an exterior surface thereof, which interact with a corresponding portion in the mounting portion in a push-fit arrangement.

In this example, as the cartridge is brought into engagement with the manifold assembly in the second manner, a second combination of protrusions will engage with the second combination of the plurality of valves.

In this example, the cartridge 4200 includes a channel extending between the reservoir 4204 and the fluid port 4206, with the orifice plate 4210 being located within the channel. In this example, the channel comprises a bypass portion 4211. The bypass portion of the channel has a diameter that is greater than that of the orifice plate 4210.

The orifice plate 4210 is biased away from the bypass portion. That is, in this example, the orifice plate 4210 is positioned on top of a biasing element 4292, which biases the orifice plate 4210 against a restriction portion 4294 (i.e. a surface with a restriction therein) within the channel. In this example, the biasing element is a spring. During normal operation, the engagement between the orifice plate and the restriction portion 4294 of the channel ensures flow is directed through the orifice 4212 of the orifice plate 4210 (as opposed to around the orifice plate). Optional seal 4213, which may sit between the orifice plate and the restriction portion 4294, such that engagement between the orifice plate and the restriction portion is via the seal, may help prevent flow around the orifice plate.

When the cartridge is in a rinsing mode, fluid enters the port and pushes the orifice plate 4210 against the biasing element 4292. This forces the orifice plate 4210 into the bypass portion of the channel. This allows water entering the port (passing through the restriction of the restriction portion 4294) to bypass the orifice 4212 of the orifice plate 4210 (i.e. the water can flow around the outside of the orifice plate 4210). This ensures that the orifice 4212 of the orifice plate 4210 does not restrict the rinse time. In other words, higher flow rates of water through the reservoir can be achieved to ensure the rinse operation can be undertaken in a reasonable time.

As discussed above, in this example, the second fluid inlet 840 and third fluid inlet 860 are located within cartridge interface layer 880, separate from the second layer 804 (within which the fluid port 806 is located). The inclusion of a separate second layer 804 and cartridge interface layer, allows the bypass mechanism (e.g. including the bypass portion of the channel and the biasing element) to be accommodated partially within the manifold assembly during coupling of the cartridge to the manifold assembly. This ensures the combination of the manifold assembly and the cartridge remains relatively compact even with the extra hardware required for the bypass mechanism. It would be understood that a manifold assembly without a separate cartridge interface layer would still function in the desired fashion, but in a less-compact manner.

The described examples of a manifold assembly allow the entire flow path, throttle and valve arrangement (where applicable) to be realised in a compact, low cost design. The multi-layer concept can achieve arbitrarily complex flow paths in only a small number of easily constructed/assembled layers. The valves can be easily actuated.

The use of an orifice plate within the cartridge allows more robust (i.e. consistent) dosing over a range of flow rates through the spraying apparatus, by ensuring a turbulent flow regime therethrough.

A spraying apparatus including a manifold assembly and cartridge of the previously described examples can be operated without a user interface. That is, the connection between the manifold assembly and the cartridge dictates the operation of the spraying apparatus. In certain embodiments, this provides the advantage that the spraying apparatus can be switched between dosing and rinsing by changing the relative configuration between the manifold assembly and the cartridge (i.e. inserting the cartridge in a different way) rather than by having to manually select a setting. This reduces the chance of accidentally operating the spraying apparatus in an unintended mode.

Provision of a rinsing mechanism provides the advantage that traces of liquid concentrate within the cartridge reservoir may be rinsed to a safe level prior to removal of the cartridge from the spraying apparatus.

By controlling the rinse time / rinse volume, a predetermined rinse operation can be easily undertaken by a user. In certain embodiments, the use of an indicator element can provide the user of a visual indicator as to when the rinse operation is complete.

Various modifications to the detailed arrangements as described above are possible. For example, the inlets / outlets / ports of the manifold assembly may be configured in any suitable way. For example, the inlets / outlets / ports may be located in any suitable layer and/or any suitable position within or on a surface of the manifold assembly. For example, the fluid inlet and/or the fluid outlet and/or rinse fluid outlet may extend from the manifold in any suitable direction. That is, the fluid inlet and/or fluid outlet and/or rinse fluid outlet (where applicable) may extend from a side of the corresponding layer (as opposed to from either the first or second surface thereof).

The valve means may be located in any suitable layer. For example, they may be integrated within a cartridge interface layer. The valve-means may be preloaded into a dosing configuration, such that the cartridge is ready for dosing when installed within the spraying apparatus.

The inlets/outlets of the manifold assembly that interact with the spraying apparatus may couple with the spraying apparatus in any suitable manner. For example, the spraying apparatus may include tubes, which stretch over a corresponding inlet/outlet of the manifold assembly. A coupling element, for example a jubilee clip, may help secure the connection between a tube and a corresponding inlet/outlet.

The described flow paths may be constructed in any suitable manner. For example, the channel for a given flow path may be located within a single layer and bounded by an adjacent layer. Alternatively, the flow path may be formed from two cooperating channels, brought together in the abutment of adjacent layers.

It will be appreciated that the reality of the flow paths described above may be more complex than described. The flow paths may, in reality be much more tortuous (rather than all being located in a single cross section as shown in Figures 19a and 19b). This is demonstrated in the channels that can be seen in the example of Figures 21a and 21b. The flow paths may interact and share common portions. Such complexity may allow the desired flow paths to be achieved in a compact arrangement, in a manner that allows the valve means to change their configuration (where applicable).

In the example illustrated in Figures 21a and 21b, the manifold assembly includes an optional guard layer 896. The guard layer 896 includes protection bosses 898 for protecting a user from the needles of the second fluid outlet / second fluid inlet / third fluid inlet. That is, the inlets/outlets of the cartridge interface layer project through the protection bosses 898 but are substantially shielded from the user by the protection bosses 898.

The layers of the manifold assembly may be constructed in any suitable way from any suitable material. For example, each layer (or a single layer / selection of layers) may be machined from a solid piece of material. Alternatively, each layer (or a single layer / selection of layers) may be injection moulded. A suitable material for each layer may be a plastic material, for example PVC, HDPE or a PC-ABS blend. The layers may be of any suitable thickness. The thickness of a given layer may be configured to be thin enough so as to achieve the required compactness of the manifold assembly, whilst still being able to accommodate a flow path of a certain depth, formed/machined therein (if applicable). For example, the layers of the manifold may be from substantially 2mm to 30mm.

The layers may be coupled in any suitable way, i.e. in any manner suitable for providing an adequate seal between adjacent layers. For example, each layer may be bonded, welded or screwed to adjacent layers.

As shown in Figures 21a and 21b, the layers of the manifold assembly may include holes through which portions of underlying layers can extend, e.g. the guard layer 896 and the valve layer 890 includes holes through which the second fluid outlet / second fluid inlet / third fluid inlet of the cartridge interface layer 880 may project/extend.

The cartridge (i.e. the reservoir thereof) may house any suitable fluid for treatment of plant matter through use in a spraying apparatus. The fluid may be of any suitable liquid concentrate formulation, for example an SL (soluble concentrate) or SC (suspension concentrate) formulation. The liquid concentrate may have any suitable concentration. A 'suitable concentration' may be a concentration that is within predetermined safety limits.

For example, the reservoir may include a paraquat formulation. The concentration of the paraquat formulation may be between 40 and 360g paraquat ion/litre. More aptly, the concentration of the paraquat formulation may be between 100 and 250g paraquat ion/litre. More aptly, the concentration of the paraquat formulation may be substantially 200g paraquat ion/litre.

In use, the liquid concentrate may be diluted to any suitable concentration. For example, a paraquat formulation as described above, may be diluted to between 0.2 and 5g paraquat ion/litre. Aptly, the paraquat may be diluted to 2g paraquat ion/litre. In other words the liquid concentrate may be diluted, such that the resulting mixture is between 0.08 and 5% liquid concentrate by volume. Aptly, the resulting mixture may be between 0.2 and 3% liquid concentrate by volume. Aptly, the resulting mixture may be substantially 2% liquid concentrate by volume.

The cartridge housing may be made from any suitable material and in any suitable way. For example, the cartridge housing may be moulded from a polymeric material. The cartridge housing may include a separate or integral lid portion including the inlets/outlets etc. That is, the upper surface of the cartridge housing in which the fluid port, the fluid inlet and the first and second fluid outlets are located may be a separate or integral lid portion or an upper surface.

In the above described examples, the reservoir is made from a flexible material, for example a polymeric and/or elastomeric material. In this example, the reservoir is made from PVC, although it may also be made from silicone or rubber including viton or nitrile rubber. The reservoir is pressure dependent, such that the introduction of water between walls of the cartridge housing and the reservoir will act to pressurise the reservoir and the liquid concentrate therein.

Although only cartridge 4200 is described as having a transparent portion, it is clear that any of the cartridges described herein may have a transparent portion for assessing the level of liquid concentrate remaining in the reservoir. The transparent portion of the cartridge (where applicable) may be formed in any suitable way. For example, the cartridge may be made in a single moulding, with a transparent portion and a frosted non-transparent portion.

In certain embodiments the cartridge may include a sacrificial element, for preventing the cartridge from being configured in a rinsing mode. That is, the cartridge may only be brought to the rinsing mode when the sacrificial element is removed. This will help prevent a user accidentally bringing the cartridge into a rinsing configuration. The sacrificial element may cover the first and/or second fluid outlets. Alternatively, the sacrificial element may cover the means for coupling the cartridge to the mounting portion (e.g. channels 4282). In either case, the sacrificial element may prevent the cartridge from being mounted in the mounting portion in the required relative configuration with the manifold assembly for rinsing.

The orifice plate may be made from any suitable material, for example a polymeric material. The orifice plate may be integral with the cartridge, for example the fluid port. Alternatively, the orifice plate may be removable from the cartridge. By providing a removeable orifice plate, the cartridge may be reconfigured with an orifice plate with different dimensions, to provide a different dosing regime.

In certain embodiments of a sprayer assembly with a rinsing configuration/mode, the rinsing mechanism may not provide a rinse for the water within the cartridge housing. That is, the manifold assembly may not include a third fluid inlet and the corresponding cartridge may not include a second fluid outlet. In such arrangements, the reservoir may be rinsed by introducing water through the fluid port for a predetermined length of time, for example 2 minutes, until a suitable amount of water has passed through the reservoir and the reservoir is considered to be adequately rinsed.

The bypass functionality of the orifice plate during rinsing may be achieved in any suitable manner. For example, the channel, within which the orifice plate is located, may be generally the same diameter as the orifice plate (such that the orifice plate constricts the flow through the channel). The bypass portion may be a portion of the channel or a portion separate from the channel with a diameter wider than the orifice plate. When the orifice plate is forced into the bypass portion against the spring bias (for example, during rinsing) flow can go through the orifice plate and around it, to allow bypass of the orifice plate during rinsing.

It would be understood that a rinsing mechanism may be provided that corresponds generally to the described example, that omits an orifice plate. That is, the inclusion of an orifice plate is not essential to the rinse functionality. It follows that the components required for the bypass may also not be required. Specifically, a cartridge for attachment to a spraying apparatus for spraying a solution may be provided, the cartridge including a cartridge housing; a reservoir for housing a liquid concentrate, wherein the reservoir is located within the cartridge housing; a fluid port for fluidly coupling the reservoir to a spraying apparatus; a fluid inlet for fluidly coupling the cartridge housing to the spraying apparatus, wherein the cartridge is configured such that fluid introduced into the cartridge housing through the fluid inlet acts to pressurise the reservoir and a first fluid outlet, for fluidly coupling the reservoir to the spraying apparatus. In a dosing mode, the cartridge housing is configured to receive water through the fluid inlet and the cartridge is configured to output liquid concentrate to the spraying apparatus through the fluid port. In a rinsing mode, the reservoir is configured to receive water through the fluid port and output a mixture of water and liquid concentrate to the first fluid outlet.

The connection means between the manifold assembly and the cartridge may be configured in any suitable manner. For example, the second fluid outlet / second fluid inlet / third fluid inlet of the inlet of the manifold assembly may comprise a needle. Correspondingly, the fluid port, the fluid inlet and the first fluid and second fluid outlets of the cartridge may each comprise a septa cap to mate with the corresponding needle. Alternatively, some or all of the connections may be needleless. That is, the inlets/outlets/ports of the manifold assembly may not have a needle connection.

The manifold assembly and cartridge may be mounted/coupled to the spraying apparatus in any suitable manner. For example, a separate mounting portion may not be required. The manifold assembly may include means to allow the cartridge to mount/couple exclusively to the manifold assembly.

The means for coupling the cartridge to the mounting portion for rinsing/dosing may be done in any suitable way.

The spraying apparatus may include a user-activated locking mechanism to prevent premature removal of the cartridge.

An assembly may be provided with a spraying apparatus including a manifold assembly of any of the previously described examples. The spraying apparatus may further include any suitable spraying body, including a lance and handle arranged in any of the ways described above. The assembly may be further provided with a compatible cartridge of any of the previously described examples. The assembly may be connected to a knapsack or tank including any suitable fluid, for example water or a solution.

In certain embodiments (for example the spraying apparatus shown in Figure 2), the spraying apparatus may include two spray arms (i.e. two lances). In this manner, the first spray arm/lance may be equipped with a nozzle of a first type and the second spray arm/lance may be equipped with a nozzle of a second type (or as shown in Figure 2 may have no nozzle). This is particularly advantageous when the corresponding manifold assembly and cartridge have a rinsing configuration. In particular, the first spray arm may be used for dosing (i.e. spraying diluted liquid concentrate to treat plant matter) and the second spray arm may be used for rinsing (i.e. spraying increasingly diluted liquid concentrate to clean the cartridge). The nozzle on the second spray arm, may be chosen to allow rapid rinsing (i.e. a less constricted nozzle).

The schematic drawings are not necessarily to scale and are presented for purposes of illustration and not limitation. For example, the size, position of the flows paths, inlets/outlets/ports are for illustrating the workings of the invention and are not limiting. It would be understood that the features shown in a given cross-section may in reality be situated in different cross-sections but may be included in a single cross-section for ease of illustration/understanding.

The drawings depict one or more aspects described in this disclosure. However, it will be understood that other aspects not depicted in the drawings fall within the scope of this disclosure.

Other aspects of the disclosure can be seen in the following numbered paragraphs:

Paragraph 1. A manifold assembly of a spraying apparatus for coupling the spraying apparatus to a reservoir of liquid concentrate, the manifold assembly comprising:

a first layer and a second layer:

a fluid port, located in the second layer, for receiving liquid concentrate from a cartridge comprising a reservoir of liquid concentrate;
a fluid inlet, located in the first layer, for receiving water from the spraying apparatus; and
a fluid outlet, located in the first layer, for outputting a mixture of water and liquid concentrate to the spraying apparatus;

wherein the manifold assembly comprises a flow path between the fluid inlet and the fluid outlet, and wherein the flow path between the fluid inlet and the fluid outlet includes a mixing section fluidly connected to the fluid port and configured to mix liquid concentrate received from the fluid port with water received at the fluid inlet.

Paragraph 2. A manifold assembly according to Paragraph 1, wherein the first and second layers are adjacent within the manifold assembly.

Paragraph 3. A manifold assembly according to Paragraph 2, wherein at least a portion of the flow path between the fluid inlet and the fluid outlet is bounded by a surface of the first layer and a surface of the second layer

Paragraph 4. A manifold assembly according to any preceding Paragraph, wherein the mixing section comprises a throttle portion.

Paragraph 5. A manifold assembly according to Paragraph 4, wherein the throttle portion is configured such that flow therethrough draws liquid concentrate to the mixing section from the fluid port.

Paragraph 6. A manifold assembly according to any preceding Paragraph, wherein the manifold assembly comprises a second fluid outlet, for outputting water to the cartridge.

Paragraph 7. A manifold assembly according to Paragraph 6, wherein the manifold assembly comprises a flow path between the fluid inlet and the second fluid outlet.

Paragraph 8. A manifold assembly according to Paragraph 6 or 7, wherein the manifold assembly further comprises a cartridge interface layer.

Paragraph 9. A manifold assembly according to Paragraph 8, wherein the second fluid outlet is located in the cartridge interface layer of the manifold assembly.

Paragraph 10. A manifold assembly according to Paragraph 9, wherein the second layer and the cartridge interface layer are adjacent within the manifold assembly.

Paragraph 11. A manifold assembly according to any of Paragraphs 6 to 10, wherein the manifold assembly has a dosing configuration, wherein in the dosing configuration the manifold assembly is configured to:

receive water at the fluid inlet;
output water through the second fluid outlet;
receive liquid concentrate in the mixing section; and
output a mixture of water and liquid concentrate to the spraying apparatus through the fluid outlet.

Paragraph 12. A manifold assembly according to any of Paragraphs 8 to 11, wherein the manifold assembly comprises a second fluid inlet, located in the cartridge interface layer of the manifold assembly, for receiving a mixture of water and liquid concentrate from the cartridge.

Paragraph 13. A manifold assembly according to Paragraph 12, wherein the manifold assembly comprises a third fluid inlet, located in the cartridge interface layer of the manifold assembly, for receiving water from the cartridge.

Paragraph 14. A manifold assembly according to Paragraph 12 or 13, wherein the manifold assembly comprises a rinse outlet, located in the first layer of the manifold assembly, for outputting a mixture of water and liquid concentrate to the spraying apparatus.

Paragraph 15. A manifold assembly according to Paragraph 14, wherein the manifold assembly comprises a flow path between the second fluid inlet and the rinse fluid outlet.

Paragraph 16. A manifold assembly according to Paragraph 14 when dependent on Paragraph 13, wherein the manifold assembly comprises a flow path between the third fluid inlet and the rinse fluid outlet.

Paragraph 17. A manifold assembly according any of Paragraphs 14 to 16, wherein the manifold assembly has a rinsing configuration, wherein in the rinsing configuration, the manifold assembly is configured to:

receive water at the fluid inlet;
output water through the fluid port;

receive a mixture of water and concentrate at the second fluid inlet; and

output a mixture of water and concentrate through the rinse fluid outlet.

Paragraph 18. A manifold assembly according to Paragraph 17, wherein in the rinsing configuration, the manifold assembly is further configured to:

receive water at the third fluid inlet;

mix the water received at the third fluid inlet with the mixture of water and concentrate through the second fluid inlet prior to outputting a mixture of water and concentrate through the rinse fluid outlet.

Paragraph 19. A manifold assembly according to Paragraphs 17 or 18, when dependent on Paragraph 11, wherein the manifold assembly comprises valve means to switch the manifold between the dosing configuration and the rinsing configuration.

Paragraph 20. A manifold assembly according to Paragraph 19, wherein in the dosing configuration the flow path between the second fluid inlet and the rinse fluid outlet and the flow path between the third fluid inlet and the rinse fluid outlet are closed by the valve means. Paragraph 21. A manifold assembly according to Paragraph 19 or 20, wherein in the rinsing configuration the flow path between the fluid inlet and the second fluid outlet is closed by the valve means.

Paragraph 22. A manifold assembly according to any of Paragraphs 19 to 21, wherein in the rinsing configuration the flow path between the fluid inlet and the fluid outlet is closed at a position between the mixing section and the fluid outlet by the valve means.

Paragraph 23. A manifold assembly according to any of Paragraphs 19 to 23, wherein the valve means comprises a plurality of valves located in a layer of the manifold assembly.

Paragraph 24. A manifold assembly according to Paragraph 23, wherein the valve means is located in a valve layer, adjacent the cartridge interface layer of the manifold assembly. Paragraph 25. A manifold assembly according to Paragraph 23 or 24, wherein in the dosing configuration a first combination of the plurality of valves is actuated, and in the rinsing configuration a second combination of the plurality of valves is actuated.

Paragraph 26. A manifold assembly according to Paragraph 25, wherein the valve means are configured such that the first combination of the plurality of valves is actuated when the manifold assembly is coupled to a cartridge in a first configuration.

Paragraph 27. A manifold assembly according to Paragraph 25, wherein the valve means are configured such that the second combination of the plurality of valves is actuated when the manifold assembly is coupled to a cartridge in a second configuration.

Paragraph 28. An assembly for treating plant matter, comprising a spraying apparatus, the spraying apparatus comprising

a manifold assembly according to any preceding Paragraph,
wherein the manifold assembly is configured to couple to a cartridge comprising a reservoir of liquid concentrate.

Paragraph 29. An assembly for treating plant matter according to Paragraph 28, wherein the spraying apparatus further comprises a cartridge.

**Claims**

1. A cartridge for attachment to a spraying apparatus for spraying a solution, the cartridge comprising:

a cartridge housing;
a reservoir for housing a liquid concentrate, wherein the reservoir is located within the cartridge housing;
a fluid port for fluidly coupling the reservoir to a spraying apparatus;
an orifice plate located between the reservoir and the fluid port, such that a flow of liquid concentrate from the reservoir to the spraying apparatus through the fluid port is directed through the orifice plate; and
a fluid inlet for fluidly coupling the cartridge housing to the spraying apparatus, wherein the cartridge is configured such that fluid introduced into the cartridge housing through the fluid inlet acts to pressurise the reservoir.

2. A cartridge according to claim 1, wherein in a dosing mode, the cartridge housing is configured to receive water through the fluid inlet and the cartridge is configured to output liquid concentrate to the spraying apparatus through the fluid port.

3. A cartridge according to any preceding claim, wherein the orifice plate is removable from the cartridge.

4. A cartridge according to any preceding claim, wherein the orifice plate is configured to induce turbulence in the flow of liquid concentrate therethrough.

5. A cartridge according to any preceding claim, wherein the orifice of the orifice plate has a diameter of substantially between 50 and 150 microns; and/or wherein the orifice plate has a thickness of between substantially 0.1 and 0.3 mm.

6.   A cartridge according to any preceding claim, wherein the reservoir comprises a polymeric and/or elastomeric material.

7.   A cartridge according to any preceding claim, wherein the cartridge housing comprises a portion that is at least partially transparent; and optionally wherein the cartridge comprises an indicator element coupled to a lower portion of the reservoir, configured to indicate the relative positioning of the lower portion of the reservoir and the cartridge housing.

8.   A cartridge according to any preceding claim, wherein the cartridge comprises a first fluid outlet, for fluidly coupling the reservoir to the spraying apparatus.

9.   A cartridge assembly according to claim 8, wherein the cartridge comprises a second fluid outlet, for fluidly coupling the cartridge housing to the spraying apparatus; and optionally wherein the second fluid outlet has smaller cross-sectional area than the first fluid outlet.

10.  A cartridge according to any preceding claim, wherein in a rinsing mode, the reservoir is configured to receive water through the fluid port.

11.  A cartridge assembly according to claim 10, when dependent on claim 9, wherein in the rinsing mode, the cartridge housing is configured to output water to the second fluid outlet and the reservoir is configured to output a mixture of water and liquid concentrate to the first fluid outlet.

12.  A cartridge assembly according to claim 10 or claim 11, wherein the cartridge comprises a sacrificial element, for preventing the cartridge from being configured in a rinsing mode.

13.  A cartridge according to claim 9, wherein the cartridge housing comprises an upper surface, wherein the fluid port, the fluid inlet and the first and second fluid outlets are located in the upper surface.

14.  A cartridge according to any preceding claim, wherein the cartridge housing comprises at least one protrusion, configured to interact with a manifold of the spraying apparatus.

15.  A cartridge according to claim 8, wherein at least one of the fluid port, the fluid inlet and the first fluid and second fluid outlets comprise a septa cap.

16.  A cartridge according to any preceding claim, wherein the cartridge comprises a channel extending between the reservoir and the fluid port, wherein the orifice plate is located within the channel; and optionally

wherein the channel comprises a bypass portion; and optionally wherein the orifice plate is biased away from the bypass portion.

17.  An assembly for treating plant matter, comprising:

   a spraying apparatus;
   a cartridge according to any preceding claim; and optionally
   a manifold assembly, for coupling the spraying apparatus to the cartridge.

Fig. 1a

Fig. 1c

Fig. 1b

400

110

104

280

200

130

500

Fig. 3

400

106

110

104

200

Fig. 2

Fig. 4a

Fig. 4b

A
B
608
610
600
614
616
602
604
618
620
606
628
C

# Fig. 5

A
B
608
610
600
622
624    612
602
604
606
C

# Fig. 6

Fig. 7

2208

2206

2200

2204

2202

Fig. 8

Fig. 9

Fig. 10

Fig. 11

3212

3206

3208

3210

← 3200

3204

3202

## Fig. 12

ΔP

a

L

b

## Fig. 13

Fig. 14

Fig. 15

Fig. 16

Fig. 17

4206

4213

4294

4212

4211

4210

4200

4208

4292

4290

4220

4202

4204

4240

Fig. 18

A          B

808          800          810          890

814  816          802

804

830          806          818  820          880

840          860

C

D          Fig. 19a

900          900

Fig. 19b

Fig. 20a

900

900

Fig. 20b

Fig. 21a

Fig. 21b

800

Fig. 22a

800

Fig. 22b

Europäisches
Patentamt
European
Patent Office
Office européen
des brevets

# EUROPEAN SEARCH REPORT

**Application Number**

EP 22 15 6166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 703 703 B2 (GAVIN DANIEL J [US]) 27 April 2010 (2010-04-27) * abstract; figure 16 * | 1-9,13, 15-17 | INV. B05B15/62 A01N43/40 B05B7/24 A01N25/00 |
| X | US 4 545 535 A (KNAPP PHILIP B [US]) 8 October 1985 (1985-10-08) * the whole document * | 1-7,15 | |
| X | US 5 954 272 A (LIAO YU CHUNG [TW]) 21 September 1999 (1999-09-21) * abstract; figure 2 * | 1-8, 15-17 | |
| Y | US 2013/214061 A1 (MACLEAN-BLEVINS MARK [US]) 22 August 2013 (2013-08-22) * paragraph [0131] – paragraph [0140]; figure 23 * | 10-12 | |
| A | US 7 661 604 B1 (MACLEAN-BLEVINS MARK T [US]) 16 February 2010 (2010-02-16) * abstract; figures 19-28 * | 10-12 | |
| X | US 7 784 715 B2 (BRILL GLORIA HAUS UND GARTENGE [DE]) 31 August 2010 (2010-08-31) | 1-8, 14-17 | **TECHNICAL FIELDS SEARCHED (IPC)** B05B A01N |
| Y | * the whole document * | 10-12 | |

The present search report has been drawn up for all claims

| Place of search | Date of completion of the search | Examiner |
|---|---|---|
| Munich | 6 May 2022 | Bork, Andrea |

EPO FORM 1503 03.82 (P04C01)

**ANNEX TO THE EUROPEAN SEARCH REPORT
ON EUROPEAN PATENT APPLICATION NO.**

**EP 22 15 6166**

This annex lists the patent family members relating to the patent documents cited in the above-mentioned European search report.
The members are as contained in the European Patent Office EDP file on
The European Patent Office is in no way liable for these particulars which are merely given for the purpose of information.

**06-05-2022**

| Patent document cited in search report | | Publication date | Patent family member(s) | | Publication date |
|---|---|---|---|---|---|
| US 7703703 | B2 | 27-04-2010 | US | 2009173806 A1 | 09-07-2009 |
| | | | US | 2010193606 A1 | 05-08-2010 |
| US 4545535 | A | 08-10-1985 | NONE | | |
| US 5954272 | A | 21-09-1999 | NONE | | |
| US 2013214061 | A1 | 22-08-2013 | NONE | | |
| US 7661604 | B1 | 16-02-2010 | NONE | | |
| US 7784715 | B2 | 31-08-2010 | DE | 102005036046 A1 | 08-02-2007 |
| | | | US | 2008178940 A1 | 31-07-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7784715 B2

- EP 2065084 B1

**Non-patent literature cited in the description**

- **CRAIG et al.** Fluid injection metering system for closed pesticide delivery in manually operated sprayers. *Crop Protection,* 1993, vol. 12 (7), ISBN 0261-2194/93/07/0549-05, 549-553